# EUROPEAN PATENT APPLICATION

(11) **EP 2 246 387 A1**
(43) Date of publication of application: **03.11.2010**
(21) Application number: 09709086.4
(22) Date of filing: 06.02.2009
(51) Int. Cl.: C08J 9/28, C08L 1/02, C08L 101/00

(54) **COMPOSITE MATERIAL COMPRISING REGENERATED CELLULOSE AND SYNTHETIC POLYMER AS SOLID COMPONENTS AND PROCESS FOR PRODUCTION OF THE MATERIAL**

(30) Priority: 08.02.2008 JP 2008029042
(71) Applicant: The University of Tokyo, Bunkyo-Ku Tokyo 113-8654 (JP)
(72) Inventor: KUGA, Shigenori, Tokyo 113-8654 (JP); CAI, Jie, Tokyo 113-8654 (JP); NARITA, Hiroe, Tokyo 113-8654 (JP)
(74) Representative: Collin, Jérôme
(86) International application number: PCT/JP2009/052024
(87) International publication number: WO 2009/099166

(57) **Abstract**

A composite material comprising regenerated cellulose and a synthetic polymer, both of which are compounded with each other on the order of nanometers, and having both excellent qualities inherent in the cellulose and those inherent in another polymer; and a process for production of the material. A composite material which comprises regenerated cellulose and a synthetic polymer as solid components, wherein fine fibers of the regenerated cellulose form a continuous region and the synthetic polymer is arranged around the fine fibers and the mean diameter of the fine fibers is 1µm or below, preferably 100nm or below, still preferably 50nm or below.

## Description

### Technical Field

The present invention relates to a composite material comprising a regenerated cellulose and a synthetic polymer as solid components, and a method for producing the material. The present invention relates, in particular, to a composite material in which a regenerated cellulose and a synthetic polymer are compounded in a microform, in particular, on the order of nanometers, and a method for producing the material.

### Background Art

Cellulose, which is a natural polymer and a regeneratable raw material for energy and materials, is widely used in both forms of a natural form and an artificially-modified form based on its crystallinity and an ability to form fibers. In the production of fibers and films of the latter regenerated cellulose, in general, cellulose solidified and regenerated from a solution is immediately subjected to treatments of stretching/solidifying/drying to be formed into a dense solid (in the form of fiber or film).

As a cellulose solvent used in such step, 1) viscose, 2) a copper ammonia liquid, 3) N-methylmorpholine oxide, 4) a solution obtained by adding a halogenated alkali (LiCl and the like) to an aprotic polar solvent. (for example, N,N-dimethylacetamide and the like), 5) an aqueous solution including caustic alkali and urea or thiourea, are known. In a step of producing the regenerated cellulose used for these solutions, a cellulose solution is formed into a suitable form, generally in the form of fibers or a film, then introduced in a solidification bath (regeneration bath) for insolubilizing cellulose, and washed and dried, to obtain dense fibers or a film. These cellulose materials are virtually pure cellulose, and exhibit advantages based on the physical properties of cellulose such as strength, water resistance and non-thermoplasticity but have disadvantages such as insufficient water absorbability, acid resistance and alkali resistance.

As a practically-used material, as a means for maintaining the above-mentioned advantages of cellulose and making up for the disadvantages, compounding with a synthetic polymer may be considered. For example, as compounding in a macroscopic level, mix spinning of fibers, sticking various films together, filling cellulose short fibers (staples) into a resin (modification to FRP) and the like are conducted (e. g., see Patent Documents 1 and 2, and Non-Patent Documents 1 to 3).

On the other hand, if a regenerated cellulose and a synthetic polymer can be compounded on the order of nanometers, a nanocomposite materi.al having a macroscopically uniform structure and having both the advantages of the cellulose and those of the other resin may be obtained.
Patent document 1: Japanese Patent Application Laid-Open No. 2007-238812.
Patent document 1: Japanese Patent Application Laid-Open No. Hei 9-509694.
Non-Patent document 1: W.G. Glasser et al., "Fiber-Reinforced Cellulosic Thermoplastic Composites", Journal of Applied Polymer Science, Vol. 73, 1329-1340 (1999).
Non-Patent document 2: K.C. Seavey et al., "Continuous cellulose fiber-reinforced cellulose ester composites", Cellulose 8: 149-159, 2001.
Non-Patent document 3: J.M. Helix et al., "The Nature of Adhesion in Composites of Modified Cellulose Fibers and Polypropylene", Journal of Applied Polymer Science, Vol. 42, 609-620 (1991).

### Disclosure of the Invention

### Problems to be solved by the Invention

However, conventionally, a nanocomposite material in which a regenerated cellulose and a synthetic polymer are compounded on the order of nanometers, which has both the advantages of the cellulose and those of another resin could not be obtained.

Therefore, an object of the present invention is to compound a regenerated cellulose and a synthetic polymer on the order of nanometers to provide a composite material having both the advantages of the cellulose and those of another resin and a method for producing the material.

### Means for Solving Problems

The present inventors studied intensively in order to achieve the above objects, and have made following inventions:
<1> A composite material comprising a regenerated cellulose and a synthetic polymer as solid components,
   wherein fine fibers of the regenerated cellulose form a continuous region,
   the synthetic polymer is arranged around the fine fibers, and
   the mean diameter of each of the fine fibers of the regenerated cellulose is 1 µm or less, preferably 100 nm or less, more preferably 50 nm or less.
<2> In the above item <1>, the synthetic polymer may be at least one selected from polyolefins, polyhalogenated olefins, polyamides, polyamic acids, polyimides, polystyrenes, polyesters, diene polymer resins, polyacrylamides, polycarbonates, polydimethylsiloxane, polysiloxane, polysulfones, polyvinyl alcohol, polyether ether ketone, acetal resins, phenol resins, melamine resins and epoxy resins,
<3> In the above item <1> or <2>, the composite material may be a solid-gas composite material. In particular, the solid-gas composite material may have a porosity of 30 to 95%.
<4> In the above item <1> or <2>, the composite material may be a solid composite material.
<5> In the above item <1> or <2>, the composite material may be a solid-liquid composite material.
<6> In any one of the above items <1> to <5>, the composite material may comprise 10 to 90, preferably 30 to 80 of the regenerated cellulose and 90 to 10, preferably 70 to 20 of the "synthetic polymer, based on the total weigh of the regenerated cellulose and the synthetic polymer of 100.
<7> A method for producing a composite material comprising a regenerated cellulose and a synthetic polymer as solid components, comprising the steps of
   a) preparing a gel of a regenerated cellulose comprising fine fibers each having a mean diameter of 1 µm or less, preferably 100 nm or less, more preferably 50 nm or less as a constitutional element of the gel;
   b) arranging a synthetic polymer and/or a precursor of the synthetic polymer around the fine fibers; and
   c) forming the precursor into the synthetic polymer in a case where the precursor is used in the step b).
<8> In the above item <7>, the step b) may comprise
   b)-1) a step of immersing the gel in a solvent which does not dissolve the gel but dissolve the synthetic polymer and/or the precursor thereof, to arrange the synthetic polymer and/or the precursor thereof in pores of the gel; and
   b)-2) a step of immersing the obtained gel in a nonsolvent for the synthetic polymer which does not dissolve the synthetic polymer; and
   the step c) may be performed before the step b)-2).
<9> In the above item <7> or <8>, the regenerated cellulose may be a wet gel or aerogel.
<10> In any one of the above items <7> to <9>, the synthetic polymer may be at least one selected from polyolefins, polyhalogenated olefins, polyamides, polyamic acids, polyimides, polystyrenes, polyester, diene polymer resins, polyacrylamides, polycarbonates, polydimethylsiloxane, polysiloxane, polysulfones, polyvinyl alcohol, polyether ether ketone, acetal resins, phenol resins, melamine resins and epoxy resins.
<11> In any one of the above items <7> to <10>, the composite material may be a solid-gas composite material. In particular, the solid-gas composite material may have a porosity of 30 to 95%.
<12> In any one of the above items <7> to <10>, the composite material may be a solid composite material.
<13> In any one of the above items <7> to <10>, the composite material may be a solid-liquid composite material.
<14> In any one of the above items<7> to <13>, the composite material may comprise 10 to 90, preferably 30 to 80 of the regenerated cellulose and 90 to 10, preferably 70 to 20 of the synthetic polymer, based on the total weight of the regenerated cellulose and the synthetic polymer of 100.

### Effects of the Invention

The present invention can compound a regenerated cellulose and a "synthetic polymer on the order of nanometers to provide a composite material having both the advantages of the cellulose and those of the other resin and a method for producing the material.

### Embodiments for carrying out the Invention

Hereinafter, the present invention will be describe in detail.

The term "regenerated cellulose" used herein refers to a material which is obtained by dissolving or treating by crystal swelling (mercerization) and regenerating a natural cellulose, which is β-1,4-linked glucan (glucose polymer) having a molecular sequence which gives a crystalline diffraction pattern having a diffraction angle which corresponds to the lattice spacings of 0.73 nm, 0.44 nm and 0.40 nm as a peak by a particle analysis.

Further, the term "synthetic polymer" used herein means both of an organic macromolecule and an inorganic macromolecule. More, the term "organic synthetic polymer" means a macromolecule which is organic substance which is not naturally present and is constituted by covalent bonds including carbons.

The present invention provides a composite material comprising regenerated cellulose and a synthetic polymer as solid components, and the production method therefor. Hereinafter the composite material will be described, and then, the production method therefor.

### <Composite material>

The composite material of the present invention comprises a regenerated cellulose and a synthetic polymer as solid components.

The regenerated cellulose forms a continuous region, so-called a network structure by the respective fine fibers thereof. Further, the "synthetic polymer is arranged around the fine fibers.

The regenerated cellulose forms a continuous region as mentioned above. The continuous region is formed of fine fibers of the regenerated cellulose, and the mean diameter of each of the fine fibers may be 1 µm or less, preferably 100 nm or less, more preferably 50 nm or less.

In the composite material according to the present invention, the synthetic polymer is arranged around the fine fibers of the regenerated cellulose. In the composite material according to the present invention, the state of the arrangement of the synthetic polymer may be any state such as a case in which the synthetic polymer may be chemically and/or physically adhered to the regenerated cellulose and a case in which the synthetic polymer is simply trapped around the continuous region so long the synthetic polymer is arranged around the fine fibers of the regenerated cellulose. Preferably, the synthetic polymer may be arranged in a state in which the polymer is not readily released.

The synthetic polymer is not specifically limited so long it makes up for the disadvantages and/or improves the advantages of the regenerated cellulose and is arranged in the composite material as mentioned above.

Examples of the synthetic polymer may include, but are not limited to, polyolefins, polyhalogenated olefins, polyamides, polyamic acids, polyimides, polystyrenes, polyesters, diene polymer resins, polyacrylamides, polycarbonates, polydimethylsiloxane, polysiloxane, polysulfones, polyvinyl alcohol, polyether ether ketone, acetal resins, phenol resins, melamine resins and epoxy resins.

In the composite material according to the present invention, when the total weight of the regenerated cellulose and the synthetic polymer is defined as 100, the regenerated cellulose may be 1.0 to 90, preferably 30 to 80, and the synthetic polymer may be 90 to 10, preferably 70 to 20.

The composite material according to the present invention may be either 1) a solid-gas composite material, 2) a solid composite material, or 3) a solid-liquid composite material.

When the composite material according to the present invention is 1) the solid-gas composite material, the porosity of the solid-gas composite material may be 30 to 95%, preferably 50 to 95%, more preferably 70 to 95%.

### <Method for producing the composite material>

The composite material may be obtained by the following production method:

The method comprises the steps of:
a) preparing a gel of a regenerated cellulose comprising fine fibers each having a mean diameter of 1 µm or less, preferably 100 nm or less, more preferably 50 nm or less as a constitutional element of the gel;
b) arranging a synthetic polymer and/or a precursor of the synthetic polymer around the fine fibers; and
c) forming the precursor into the synthetic polymer in a case where the precursor is used in the step b); to obtain the above composite material.

The terms "regenerated cellulose", "synthetic polymer" and "composite material" used herein have the same definitions as mentioned above.

The step a) is a step for preparing a gel of the regenerated cellulose. The gel of the regenerated cellulose may be a wet gel or aerogel. As these gels, gels obtained by conventionally known means, and a gel disclosed by the present inventors in other application (Japanese Patent Application No. 2007-073104, the whole content of which is incorporated herein by reference) may be used.

Specifically, gels obtained by conventionally known means may include, but are not limited to, gels obtained by a so-called viscose process; gels obtained by a so-called copper-ammonia process; cellulose gels obtained by regenerating a cellulose solution by a concentrated aqueous solution of calcium thiocyanate (See JP-A No. 55-44312; H. Jin H, S. Kuga, "Nanofibrillar Cellulose Aerogels", Colloids and Surfaces A, 240, 63-67 (2004). Whole contents of these are incorporated herein by reference); and the like.

Further, the gel which the present inventors disclose in other application (Japanese Patent Application No. 2007-073104) can be obtained by dissolving cellulose in an aqueous solution including i) 2 to 20 wt%, preferably 4 to 10 wt% of caustic alkali; and ii) 4 to 20 wt%, preferably 6 to 15 wt% of urea or thiourea so that the amount of cellulose becomes 0.2 to 20%, preferably 0.3 to 10% by a weight ratio to prepare a cellulose solution, and immersing the cellulose solution in a nonsolvent for cellulose. Alternatively, the cellulose gel can be obtained by dissolving cellulose in an organic solvent solution including a halogenated alkali by 5 to 12 wt%, preferably 6 to 10 wt% so that the amount of cellulose becomes 0.2 to 20%, preferably 0.5 to 10% by weight ratio to prepare a cellulose solution, and immersing the cellulose solution in a nonsolvent for cellulose. Furthermore, the nonsolvent for cellulose may be selected from the group consisting of water, lower alkyl alcohols (methanol, ethanol and the like) and aqueous solutions thereof; lower ketones (acetone and the like) ; lower aliphatic acid esters (ethyl acetate and the like); acidic aqueous solutions (diluted sulfuric acid, diluted hydrochloric acid and the like): and diluted aqueous solutions of salts (sodium sulfate and the like); and mixtures thereof, preferably from the group consisting of pure water, methanol, ethanol, an aqueous solution of 20% or less of diluted sulfuric acid and 20% or less of sodium sulfate, and mixtures thereof.

The step b) is a step of arranging a synthetic polymer and/or a precursor of the synthetic polymer around the fine fibers which constitute the gel.

More specifically, the step b) may comprise
b) -1) a step of immersing the gel in a solvent which does not dissolve the gel but dissolve the synthetic polymer and/or the precursor thereof to arrange the synthetic polymer and/or the precursor thereof in pores of the gel; and
b)-2) a step of immersing the obtained gel in a nonsolvent for the synthetic polymer which does not dissolve the synthetic polymer. Further, the step c), i.e., the step of forming the precursor of the synthetic polymer into the synthetic polymer, may be performed before the step b)-2).

The step c) is a step of obtaining the synthetic polymer from the precursor of the synthetic polymer. Examples of the precursor of the synthetic polymer may include a monomer, and oligomers such as a dimer and a trimer of the desired synthetic polymer. The means for obtaining the synthetic polymer from the precursor may be selected in accordance with the precursor to be used.

The method may comprise an additional step before the step a) or after the step c). For example, the method may include a step of forming the composite material into a solid composite material, a solid-liquid composite material or a solid-gas composite material after the step c)..

Furthermore, further steps may be included between the steps.

The resulting composite material can be applied as a thermoplastic and hydrophobic structural material such as a material for containers which can be heat-molded, for example, in a case where polystyrene is used as the synthetic polymer.

Further, the composite material obtained by using, for example, a polyimide as the synthetic polymer can be applied as a heat resistant structural material or a heat insulating material, for example, as a wall material for heat insulating containers, and the like. However, these examples of applications are merely exemplified, and various applications of the composite material according to the present invention are possible in accordance with the synthetic polymer to be used.

Hereinafter, the present invention will be illustrated with preference to Examples, but it is not to be construed as being limited thereto.

### Example 1:

### <Preparation of cellulose gel>

96 g of an aqueous solution including 7% of sodium hydroxide and 12% of urea was cooled to -12°C. Thereto, 4 g of filter paper pulp (pure cellulose manufactured by Advantec Toyo Kaisha Ltd.) was added and stirred, thereby the cellulose was quickly dissolved, to afford a transparent solution.

The cellulose solution was extended on a glass plate and spread using a glass rod on which a wire having a diameter of 0.5 mm was wound on both ends, to form a solution layer having a thickness of 0.5 mm. The resulting glass plate was immediately immersed in 100 mL of ethanol. Alter leaving for 10 minutes, the solution was gelled and could be peeled from the glass plate, thereby giving a sheet-like cellulose gel. The cellulose gel was washed thoroughly with ethanol, and solvent substitution was performed by immersing in toluene.

### <Immersing of cellulose gel in polystyrene-containing toluene solution>

10 g of the toluene-containing cellulose gel was immersed in 100 g of a toluene solution in which 5 g of polystyrene (Wako Pure Chemicals) was dissolved (polystyrene concentration: 5%), and stirred for 1 hour to let the polystyrene penetrate into pores of the cellulose gel. The gel was removed from the solution, the liquid adhered thereon was wiped off, and the gel was immediately immersed in ethanol, thereby to precipitate the polystyrene in the gel and the gel became opaque. The gel was washed thoroughly with a fluorinated hydrocarbon solvent "Zeorora H" (manufactured by Zeon Corporation) and freeze dried to give cellulose-polystyrene composite aerogel A-1.

The adsorbing property of aerogel A-1 was measured using Quantachrome-Nova 4000 type nitrogen adsorbing device to obtain a nitrogen adsorption specific surface area measured by a BET method of 281 m²/g. The density obtained from the size and weight of the aerogel was 0.249 g/cm³.

### (Comparative Example 1)

Separately from Example 1, aerogel A-0 containing only cellulose and having a similar size to that of Example 1 was prepared. Namely, aerogel A-0 containing only cellulose was obtained in a manner similar to Example 1, except that <Immersing of cellulose gel in polystyrene-containing toluene solution> in Example 1 was not performed.

The aerogel A-0 has a. nitrogen adsorption specific surface area of 420 m²/g and a density of 0.15 g/cm³ (porosity 90%).

From the comparison between the weight of A-0 in Comparative Example 1 and the weight of A-1 in Example 1, it was found that the ratio of polystyrene was 32% when cellulose was 100% for A-1 (the weight ratio of cellulose:polystyrene = 100:32).

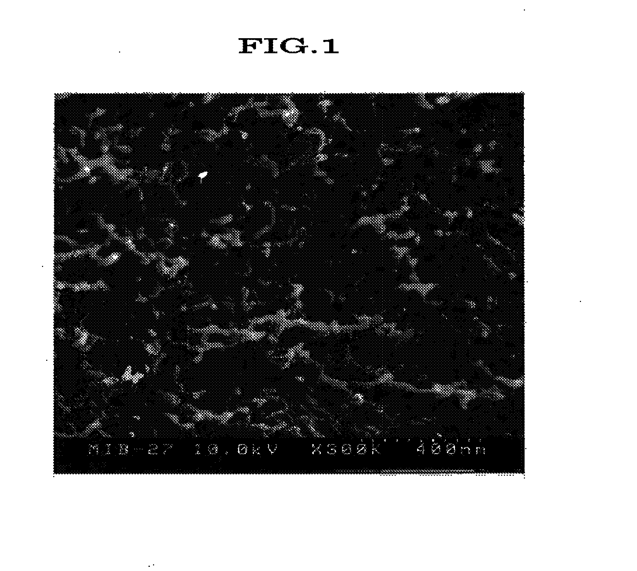

Further, according to the observation by a scanning electron microscope (Fig. 1), the inside of the gel A-1 of Example 1 has a network structure composed of fine fibers having a width of about 20 to 40 nm which is similar to that of cellulose only (A-0 of Comparative Example 1), and the polystyrene adhered to the fine fibers of the cellulose to form a nanoporous structure.

From these data, it is found that the void structure of A-0 of Comparative Example 1 was maintained in A-1 of Example 1. Further, the porosity of A-0 (Comparative Example 1), which is calculated from the density, is 90%. More, the porosity of A-1 (Example 1) is 82.2%.

### Example 2:

Cellulose-polystyrene composite aerogel A-2 was obtained in a manner similar to Example 1, except that the concentration of the polystyrene in the polystyrene/toluene solution used was adjusted to 10% in <Immersing of cellulose gel in polystyrene-containing toluene solution> in Example 1.

In the aerogel A-2, the ratio of the polystyrene was 66% with respect to 100% of cellulose, and the density was 0.264 g/cm³.

### Example 3:

Cellulose-polystyrene composite aerogel A-3 was obtained in a manner similar to Example 1, except that the concentration of the polystyrene in the polystyrene/toluene solution used was adjusted to 15% in <Immersing of cellulose gel in polystyrene-containing toluene solution> in Example 1.

In the aerogel A-3, the ratio of the polystyrene was 87% with respect to 100% of cellulose, the density was 0.273 g/cm³, and the nitrogen absorption surface area was 196 m²/g.

### Example 4:

Cellulose-neoprene composite aerogel B-1 was obtained in a manner similar to Example 1, except that the polymer solution to which the cellulose gel is to be immersed was changed to a 2% toluene solution of neoprene (manufactured by Okenshoji Co. , Ltd.) in <immersing of cellulose gel in polystyrene-containing toluene solution> in Example 1.

The density of the aerogel B-1 was 0.273 g/cm³.

### Example 5:

Cellulose-polyvinyl chloride composite aerogel C-1 was obtained in a manner similar to Example 1, except that tetrahydrofuran was used instead of toluene in <Preparation of cellulose gel> in Example 1 and the polymer solution to which the cellulose gel is to be immersed in <Immersing of cellulose gel in polystyrene-containing toluene: solution> was changed to a tetrahydrofuran solution including 1.0% of polyvinyl chloride (Wako Pure Chemicals).

In aerogel C-1, the ratio of the polyvinyl chloride was 14% with respect to 100% of cellulose, the density was 0.210 g/cm³, and the nitrogen adsorption surface area was 343 m²/g.

### Example 6:

Cellulose-polyvinyl chloride composite aerogel C-2 was obtained in a manner similar to Example 5, except that the concentration of the polyvinyl chloride in Example 5 was adjusted to 5%.

In aerogel C-2, the ratio of the polyvinyl chloride was 63% with respect to 100% of cellulose, and the density was 0.192 g/cm³.

### Example 7:

Cellulose-synthetic polymer composite films were obtained by immersing the cellulose gels in the synthetic polymer solution in Examples 1 to 6, wiping off the liquid adhered to the outside of the gels, contacting the gels to glass plates and directly drying.

These were all transparent and dense films, and no void was observed even by an electron microscope.

### Example 8:

When the cellulose aerogel A-0 of Comparative Example 1 was immersed in a 5% polystyrene-toluene solution, the solution was immediately absorbed in the aerogel. This was immersed in ethanol to precipitate the polystyrene, and freeze dried from Zeorora H in a similar manner to Example 1, to give a cellulose-polystyrene composite aerogel similar to Example 1.

Further, a dense film similar to Example 7 was obtained by directly drying from toluene as in Example 7.

### Example 9:

A cellulose aerogel or a dense film was prepared in a manner similar to Example 8, except that a 2% to 10% solution of polyamic acid in dimethylacetamide (DMAc) was used instead of the "5% polystyrene-toluene solution" in Example 8. Furthermore, the polyamic acid was prepared as follows according to a conventional method. Absolutely-dried 4-,4'-diaminodiphenylether was dissolved in dehydrated DMAc, and an equivalent mol amount of a powder of pyromellitic dianhydride was added thereto and stirred quickly. This reaction system was prepared so that the concentration became 15 wt%.

For this cellulose aerogel or dense film, the ratio of the polyamic acid was 8% to 122% with respect to 100% of cellulose (weight ratio of cellulose:polyamic acid = 100:8 to 100:122).

A polyimide-containing cellulose aerogel or dense film could be obtained by treating the polyamic acid-containing cellulose aerogel or dense film in vacuo at 250°C for 10 minutes to give a polyimide-containing cellulose aerogel or dense film. The progress and completion of the imidization was confirmed by decrease in the weight and an infrared absorption spectrum.

### Example 10:

Methyl methacrylate was polymerized by replacing water in the liquid including the cellulose gel with acetone, then replaced with methyl methacrylate (liquid) containing 1% of benzoyl peroxide as a polymerization initiator, removing the liquid adhered to the outside of the gel, and leaving at 45°C for 10 hours in Example 1. As a product, a dense composite in which methyl methacrylate was filed in the voids of the cellulose gel was obtained.

### Brief Description of the Drawings.

Fig. 1 shows a scanning electron microscopic image of the cellulose-polystyrene composite aerogel A-1 of Example 1.

## Claims

1. A composite material comprising a regenerated cellulose and a synthetic polymer as solid components,
wherein fine fibers of the regenerated cellulose form a continuous region,
the synthetic polymer is arranged around the fine fibers, and
the mean diameter of each of the fine fibers of the regenerated cellulose is 1 µm or less.

2. The material according to claim 1, wherein the synthetic polymer is at least one selected from polyolefins, polyhalogenated olefins, polyamides, polyamic acids, polyimides, polystyrenes, polyesters, diene polymer resins, polyacrylamides, polycarbonates, polydimethylsiloxane, polysiloxane, polysulfones, polyvinyl alcohol, polyether ether ketone; acetal resins, phenol resins, melamine resins and epoxy resins.

3. The material according to claim 1 or 2, wherein the composite material is a solid-gas composite material and has a porosity of 30 to 95%.

4. The material according to any one of claims 1 to 3, wherein the composite material comprises 10 to 90 of the regenerated cellulose and 90 to 10 of the synthetic polymer, based on the total weight of the regenerated cellulose and the synthetic polymer of 100.

5. A method for producing a composite material comprising a regenerated cellulose and a synthetic polymer as solid components, comprising the steps of:
a) preparing a gel of a regenerated cellulose comprising fine fibers each having a mean diameter of 1 µm or less as a constitutional element of the gel;
b) arranging a synthetic polymer and/or a precursor of' the synthetic polymer around the fine fibers; and
c) forming the precursor into the synthetic polymer in a case where the precursor is used in the step b).

6. The method according to claim 5, wherein the step b) comprises
b)-1) a step of immersing the gel in a solvent which does not dissolve the gel but dissolve the synthetic polymer and/or the precursor thereof, to arrange the synthetic polymer and/or the precursor thereof in pores of the gel; and
b)-2) a step of immersing the obtained gel in a nonsolvent for the synthetic polymer which does not dissolve the synthetic polymer; and
the step c) is performed before the step b)-2).

7. The method according to claim 5 or 6, wherein the synthetic polymer is at least one selected from polyolefins, polyhalogenated olefins, polyamides, polyamic acids, polyimides, polystyrenes, polyesters, diene polymer resins, polyacrylamides, polycarbonates, polydimethylsiloxane, polysiloxane, polysulfones, polyvinyl alcohol, polyether ether ketone, acetal resins, phenol resins, melamine resins and epoxy resins.

8. The method according to any one of claims 5 to 7, wherein the composite material is a solid-gas composite material and has a porosity of 30 to 95%.

9. The method according to any one of claims 5 to 8, wherein the composite material comprises 10 to 90 of the regenerated cellulose and 90 to 10 of the synthetic polymer, based on the total weight of the regenerated cellulose and the synthetic polymer of 100.
